# EUROPEAN PATENT SPECIFICATION

(11) **EP 3 272 197 B1**
(45) Date of publication and mention of the grant of the patent: **17.03.2021**
(21) Application number: 16382348.7
(22) Date of filing: 19.07.2016
(51) Int. Cl.: A01C 7/04, A01C 19/02

(54) **SINGLE-SEED METER SYSTEM AND SEED PLANTER INCLUDING SAID SYSTEM**
EINZELSAATDOSIERSYSTEM UND EINZELKORNSÄMASCHINE MIT DEM SYSTEM
SYSTÈME DE DOSAGE DE SEMENCES MONOGRAINE ET SEMOIR MONOGRAINE COMPRENANT LEDIT SYSTÈME

(43) Date of publication of application: 24.01.2018
(73) Proprietor: Maquinaria Agricola Solà, S.L., 08280 Calaf (ES)
(72) Inventor: SOLÁ BONET, Jordi, 08280 Calaf (ES)
(74) Representative: Ponti & Partners, S.L.P

(56) References cited:
- EP-A1- 1 310 147
- EP-A1- 2 923 544
- EP-A1- 3 017 672

## Description

The present invention relates to a single-seed metering system for a single-seed planter and to a pneumatic single-seed planter that includes said metering system.

### Background of the invention

Single-seed seeders are used to sow seeds of crops that require sufficient space to grow properly with precision. These single-seed seeders comprise a series of independent sowing units mounted on a frame adapted to regulate the distance between seeding lines by varying the distance between the sowing units. Each of these sowing units includes a metering device that makes it possible to dispense entrained singulated seeds at regular intervals.

Single-seed metering systems may be of the mechanical or pneumatic type. Pneumatic-type metering systems use the depression created by a fan to extract the seeds from the dispensing chamber. In these systems, the seed grains are suctioned due to the suction of air through the holes of a seed distribution disc and adhered to the surface of said distribution disc while said disc rotates in the interior of a housing having connection means for connecting to air suctioning means. In the interior of the housing, the distribution disc rotates until reaching a suction-devoid area disposed in correspondence with an outlet mouth where through seeds flow out of the housing where into the grains fall due to the loss of suction.

Seed metering systems such as those described in the preceding paragraph are known, which comprise a seed suction body rotationally mounted in the interior of the housing, whereto the seed distribution disc is integrally connected to rotate together with said body. This seed suction body is adapted to cooperate with the air suctioning means of the system such that, when in use, said body defines a chamber wherein the air is suctioned through the holes of the distribution disc. The seed grains adhere to the distribution disc due to the suction of air through said holes.

The suction body of the described metering systems is actuated using means that include a mechanism with chains or belts to transmit the rotational movement from an electric motor or from a mechanical actuation to said body. However, the chains or belts have the drawback that they are very easily soiled by the dust generated during the sowing process which, over time, causes the drag torque required to actuate the suction body to increase. In order to avoid these problems, the chains or belts that actuate the seed suction body must be very frequently cleaned and lubricated. Another drawback of the metering systems of the state of the art is that they require the use of elements for tensioning said belts or chains, which causes the rotation of the suction body and of the distribution disc to be affected by the relative movements of the system and not be uniform, thereby reducing sowing precision.

Document EP2923544A1 discloses a single grain seeder, which is able to switch from an overpressure system to a vacuum system. To be able to operate in the vacuum operation mode the seeder comprises a housing having connection means for connecting to air suction means, a seed distribution disc having a plurality of holes and an air suction body or hollow drum configured to be rotationally mounted in the interior of said housing by means of a drive motor. The air suction body or hollow drum is adapted to cooperate with the air suction means when the system is in the vacuum mode of operation. In the overpressure operation mode, a blower impels compressed air inside the housing through a pressurized line so that the housing which surrounds the hollow drum needs to be closed and the drive motor actuating the outer perimeter of the hollow drum requires to be guided into the housing in a sealed manner.

### Description of the invention

The objective of the present invention is to provide a single-seed metering system that solves the aforementioned problems and which has the advantages described below.

In accordance with said objective, according to a first aspect, the present invention provides a single-seed metering system for a seeder with the features of claim 1.

In accordance with a second aspect, the present invention provides a pneumatic single-seed planter that comprises a plurality of single-seed sowing groups, each of said sowing groups including the metering system claimed herein.

The system of the present invention has the advantage that the suction body may be actuated through a mechanism that acts on means envisaged on the outer perimeter of the suction body. As a result, the system may be actuated directly from the exterior of the housing, without need for belts or chains and tensioning elements that hinder the uniform rotation of the disc joined to the suction body.

Additionally, the system has the advantage that it can be used with distribution discs of scarce thickness, since the actuation mechanism of the system acts on the outer perimeter of the suction body and not on the distribution disc itself. For example, the thickness of the distribution disc may be 4 mm.

Preferably, said means for actuating the suction body comprise an interconnection surface envisaged in the outer circular perimeter of said body to engage with a gear associated with said motor.

The outer perimeter of said suction body is configured in the manner of a cogwheel for its coupling to another cogwheel associated with the mechanism of said drive motor.

According to a preferred embodiment, said system comprises a gear train of at least two gears to transmit the movement of the shaft of said motor to said suction body, one of said gears being configured to be interconnected to the cogged surface of the outer perimeter of said suction body to actuate said body.

The outer perimeter of the suction body acts as a driven gear that can be directly actuated by another gear associated with the drive motor that actuates the system. Preferably, the system includes a first gear that is actuated by the motor shaft and an intermediate gear that is interconnected with the cogged surface of the circular perimeter of the suction body.

Advantageously, said intermediate gear configured to be interconnected to the surface of the outer perimeter of said body is made of material having less resistance to wear than that of the surface of said body, such that it may easily be replaced by another when necessary.

Preferably, said suction body, includes a hole where through a shaft is introduced whereon said body is rotationally mounted, wherein the suctioned air is susceptible to being extracted through said hole by means of the air suctioning means of the system.

According to the present invention, the housing of the system comprises an upper aperture disposed in correspondence with a section of the outer perimeter of said suction body, said suction body being susceptible of being directly actuated by a gear of the actuation mechanism through said aperture.

Also advantageously, said housing is associated with seed inlet and outlet mouths disposed in correspondence with the seed metering chamber that defines the distribution disc in the interior of the housing.

Preferably, said system comprises a blocking element for interrupting the suction of air through the holes of the disc which is configured to be mounted in the manner of a slide on one side of the distribution disc when said disc rotates, in order to interrupt the suction of air and cause the seeds to fall in a sector of the suction chamber which is disposed in correspondence with the outlet mouth of the housing.

Advantageously, said distribution disc is made of steel and said suction body is made of plastic material. In this manner, the steel disc has the advantage of having a long useful life, while the plastic suction body is lightweight and easy to handle.

The air suction body is configured to be mounted in the interior of the housing of the metering system according to any of the preceding claims, which comprises an outer perimeter having means for actuating said suction body by means of an actuating mechanism associated with a drive motor of the system.

Preferably, said suction body comprises an interconnection surface that interconnects with a gear associated with the actuation mechanism of the system, which is envisaged in the outer circular perimeter of said body.

Said air suction body includes an outer circular perimeter having a cogged surface and an inner circular perimeter that defines a central air outlet. This suction body is configured in the manner of an air hood that suctions air in the interior of the system housing.

The outer perimeter of said suction body is configured in the manner of a cogwheel for coupling to another cogwheel associated with said drive motor and, preferably, the inner perimeter of said suction body defines a central hole where through a shaft is introduced wherein said body is rotationally mounted, wherein the air suctioned by the air suction means of the system is susceptible of being extracted through said hole.

Also preferably, the suction body includes means for integrally connecting the seed distribution disc to the cogwheel of said body.

### Brief description of the figures

In order to better understand the foregoing, drawings are attached which, schematically and merely by way of non-limiting example, represent a practical case of embodiment.
Figure 1 shows a perspective view of an embodiment of the claimed metering system that shows the exterior of the housing and the gear train of the system that actuates the suction body.
Figure 2 shows a perspective view of the metering system of figure 1 devoid of a part of the housing that shows the suction body and the outer circular perimeter of said body configured in the manner of a cogwheel.
Figure 3 shows a perspective view of the metering system of figure 1 without a part of the housing that shows the distribution disc mounted on the suction body.
Figure 4 shows a perspective view of the metering system of figure 3 without the distribution disc that shows the air blocking element configured in the manner of a slide in the air suction chamber that defines the air suction body.
Figure 5 shows an exploded perspective view of the assembly formed by the suction body and distribution disc of the system.
Figure 6 shows a cross-section of the suction body of the system that includes a distribution disc integrally connected to said body.

### Description of a preferred embodiment

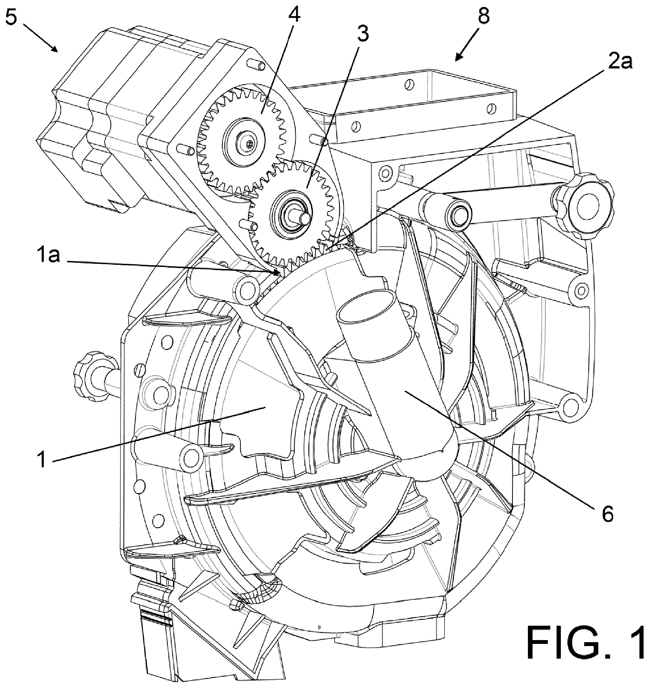

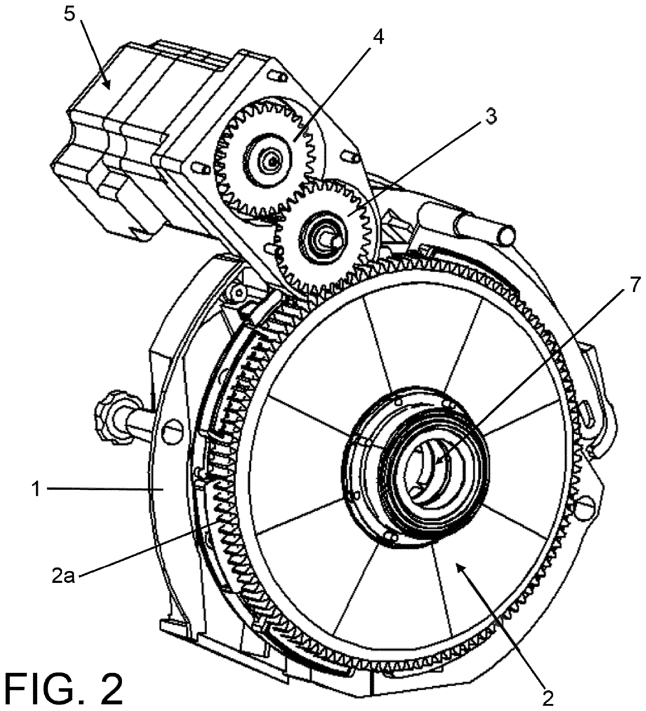

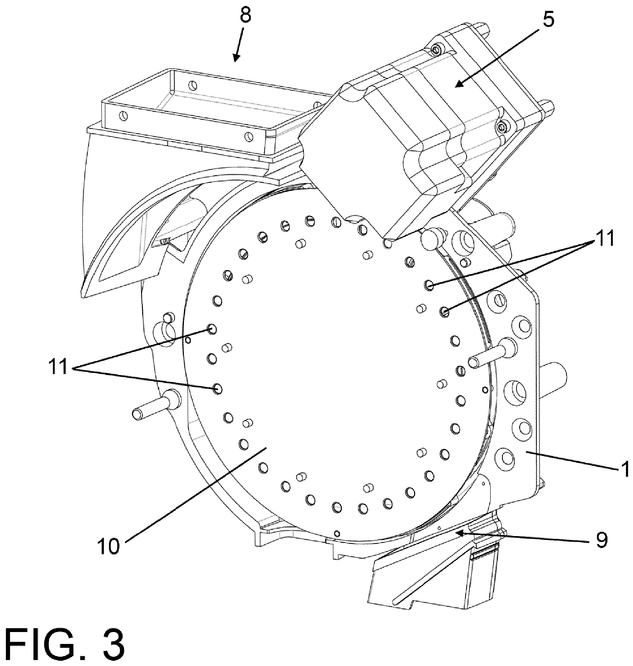

Following is a description of a preferred embodiment of the system and claimed suction body making reference to figures 1 to 6.

The single-seed metering system comprises a housing 1 having connection means 6 for connecting to air suction means (not represented), a distribution disc 10 having a plurality of holes 11 and a suction body 2 configured to be rotationally mounted in the interior of the housing 1. The suction body 2 is adapted to cooperate with the air suction means such that, when the system is in use, said suction body 2 defines a chamber 2b wherein the air is suctioned through the holes 11 of the distribution disc 10.

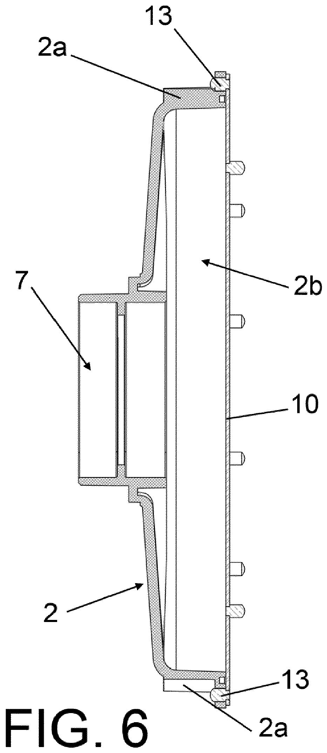

As can be observed in the cross-section of figure 6, the distribution disc 10 is configured to be integrally connected to the suction body 2 through stubs 13 which are inserted in holes envisaged in the body 2. When it is joined to the suction body 2, the opposite side of this distribution disc 10 defines a chamber for metering the seeds that adhere to the disc 10 due to the suction of air through the holes 11.

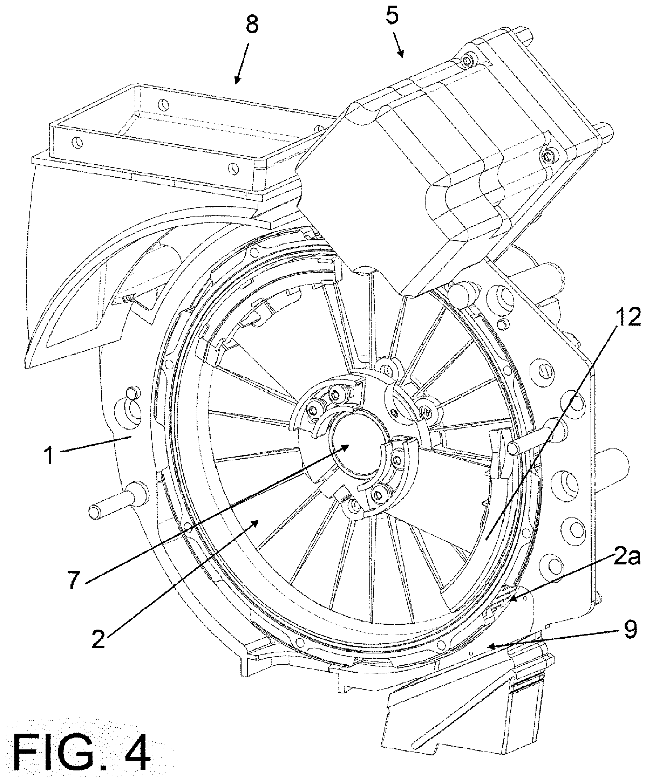

The housing 1 that is disposed in correspondence with said metering chamber includes an inlet mouth 8 that receives seeds from a hopper and an outlet mouth 9 wherefrom seeds fall due to the loss of suction produced by a blocking element 12 that blocks the suction of air. Figure 4 shows a view of the suction body 2 without the distribution disc 10 wherein the blocking element 12 that is configured in the manner of a slide to interrupt the suction of air and cause the seeds to fall in correspondence with the outlet mouth 9 of the housing 1 that is associated with a sowing tube of the seeder can be observed.

The claimed metering system is characterised in that the outer circular perimeter of the suction body 2 comprises means 2a, for being actuated by means of an actuation mechanism associated with a drive motor 5. In the embodiment described, these means comprise an interconnection surface that interconnects the perimeter of the suction body 2 that is configured with a plurality of cogs in the manner of a cogwheel 2a for coupling to another cogwheel 3 associated with the mechanism of said drive motor 5.

As commented in the description of the invention, as a result of these characteristics, the system may be directly actuated from the exterior of the housing 1, dispensing with belts or chains and tensioning elements that hamper the uniform rotation of the distribution disc 10 joined to the suction body. Furthermore, the system has the advantage that it can be used with distribution discs 10 of scarce thickness, since the mechanism 3, 4 of the actuation system acts upon the cogwheel 2a of the outer perimeter of the suction body 2 and not on the distribution disc 10.

According to the preferred embodiment shown by the figures, the system comprises a three-gear train 2a, 3, 4, including that incorporated to the perimeter of the suction body 2 for transmitting the movement of the drive motor 5 shaft to the suction body 2. The two gears 3, 4 are configured to be interconnected to the surface of the outer perimeter of the suction body 2, which is configured in the manner of a cogwheel 2a. The cogged 2a outer perimeter of the suction body 2 acts as a gear driven by an intermediate gear 3 that receives the movement of the gear 4 associated with the shaft of the drive motor 5 that actuates the system.

In the embodiment described, the intermediate gear 3 is made of a material having less resistance to wear than the cogwheel 2a of the perimeter of the suction body 2, such that said gear 3 can easily be replaced when required, constituting a part that is easily replaced.

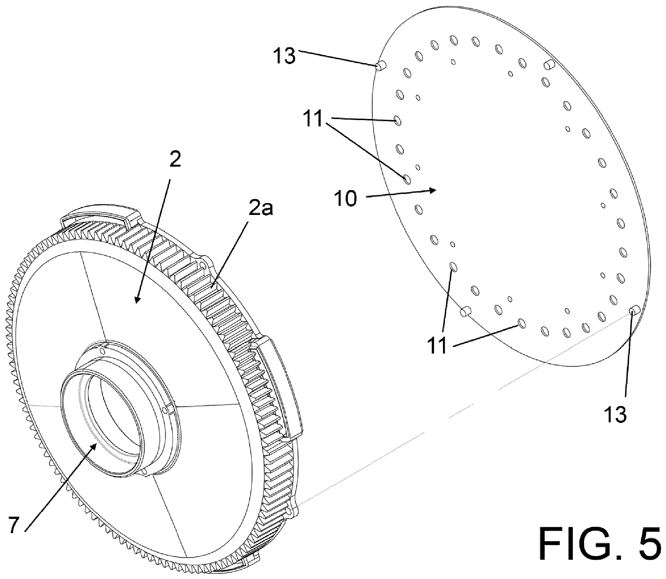

As can be observed in figures 5 and 6, the suction body 2 includes a hole 7 where through the shaft whereon said body 2 is rotationally mounted is introduced. This hole 7 is disposed in correspondence with a suction tube of the air suction means of the system, the suctioned air being susceptible to being extracted through said hole 7 when the system is in use.

Following is a description of the operation of the metering system making reference to figures 1 to 6.

The claimed metering system is especially indicated for working with a pneumatic seeder that comprises air suctioning means. However, the same system could also work with a non-pneumatic seeder, provided that it also has the necessary air suctioning means for adhering the seeds that enter the meter chamber to one of the sides of the distribution disc 10.

The suction of air in the interior of the housing 1 is carried out while the suction body 2 and the disc 10 itself rotate in unison on a shaft (not shown). As can be observed in figure 1, the housing 1 that includes the suction body 2 comprises an upper aperture 1a which is disposed in correspondence with a section of the outer circular perimeter of said suction body 2, such that the gears 3, 4 of the actuation mechanism of the system can directly attack the surface of the cogwheel 2a of the circular perimeter of the suction body 2 without need to use belts or chains.

When the distribution disc 10 and the suction body 2 rotate simultaneously, the seeds that are adhered to the distribution disc 10 are transported to the air suction blocking element 12, which acts in the manner of a slide to cause the seeds to fall precisely in correspondence with the outlet mouth 9 of the housing 1.

The claimed system has the advantage of making it possible to dispense with the belts or chains of the systems of the state of the art, thereby improving the rotational uniformity of the distribution disc 10, which entails an increase in sowing quality and also significantly reduces the maintenance tasks to be performed, in addition to the drag torque required to actuate the suction body 2.

Despite the fact that reference has been made to a specific embodiment of the invention, it is evident for a person skilled in the art that the described system is susceptible to numerous variations and modifications, and that all the aforementioned details may be replaced by other technically equivalent ones, without detracting from the scope of protection defined by the attached claims.

## Claims

1. A single-seed metering system for a planter, which comprises a housing (1) having connection means (6) for connecting to air suction means, a seed distribution disc (10) having a plurality of holes (11) and an air suction body (2) configured to be rotationally mounted in the interior of said housing (1), said air suction body being adapted to cooperate with said air suction means when the system is in use, and said distribution disc (10) being susceptible of being integrally connected to said suction body (2) such as to define a metering chamber for the seeds that are adhered to the distribution disc (10) due to the suction of air, said system including a drive motor (5) and an actuating mechanism (3,4) associated to said drive motor (5), the outer perimeter of said suction body (2) comprising means (2a) for actuating said suction body (2) by means of said actuating mechanism (3,4) associated to a drive motor (5) of the system, **characterized in that** the exterior of the housing (1) comprises an upper aperture (1a) disposed in correspondence with a section of the outer circular perimeter of the air suction body (2), a cogged surface (2a) of the outer perimeter of the suction body (2) being susceptible of being directly actuated from the exterior of the housing (1) through said upper aperture (1a) by a gear of the actuation mechanism (3,4).

2. A system, according to claim 1, wherein said means for actuating the suction body (2) comprise an interconnection surface (2a) envisaged in the outer circular perimeter of said body (2) to engage with a gear associated with said drive motor (5).

3. The system, according to any of claims 1 to 2, which comprises a gear train consisting of at least two gears (3, 4) to transmit the movement of the shaft of said drive motor (5) to said suction body (2), wherein one of said gears is configured to be interconnected to the surface of the outer perimeter of said suction body (2) to directly actuate said suction body (2).

4. The system, according to claim 3, wherein said gear (3) that is configured to interconnect to the surface of the outer perimeter of said body (2) is made of a material having less resistance to wear than that of the cogged surface (2a) of the perimeter of the suction body (2).

5. The system, according to any of the preceding claims, wherein said suction body (2) includes a hole (7) where through a shaft whereon said body (2) is rotationally mounted is introduced, wherein the air suctioned by the air suctioning means of the system is susceptible of being extracted through said hole (7).

6. The system, according to any of the preceding claims, wherein said housing (1) is associated with seed outlet (8) and inlet (9) mouths disposed in correspondence with the seed metering chamber that defines the distribution disc (10) in the interior of the housing (1).

7. The system, according to any of the preceding claims, which comprises a blocking element (12) that blocks the suction of air of the holes (11) of the disc (10) which is configured to be mounted in the manner of a slide on one side of the distribution disc (2) when said disc rotates, for the purpose of interrupting the suction of air and causing the seeds to fall in correspondence with an outlet mouth (9).

8. The system, according to any of the preceding claims, wherein said distribution disc (10) is made of steel and said suction body (2) is made of plastic material.

9. A pneumatic single-seed planter that includes the metering system according to any of claims 1 to 8.

10. A pneumatic single-seed planter according to claim 9, wherein it includes a plurality of single-seed sowing groups, each of said sowing groups including the single-seed metering system according to any of claims 1 to 8.

11. A pneumatic single-seed planter according to any of claims 9 to 10, wherein it only uses suction air to extract seeds from a metering chamber of each single-seed metering system.

## Patentansprüche

1. Einzelsaat-Dosiersystem für eine Pflanzmaschine, das ein Gehäuse (1), das Verbindungsmittel (6) zum Verbinden mit Luftansaugmitteln aufweist, eine Saatverteilerscheibe (10), die mehrere Löcher (11) aufweist, und einen Luftansaugkörper (2), der konfiguriert ist, im Inneren des Gehäuses (1) drehbar montiert zu sein, umfasst, wobei der Luftansaugkörper dafür ausgelegt ist, mit den Luftansaugmitteln zusammenzuwirken, wenn das System in Betrieb ist, und die Verteilerscheibe (10) mit dem Ansaugkörper (2) integral verbindbar ist, um eine Dosierkammer für das Saatgut zu definieren, das aufgrund des Luftansaugens an der Verteilerscheibe (10) haftet, wobei das System einen Antriebsmotor (5) und einen Betätigungsmechanismus (3, 4), der dem Antriebsmotor (5) zugeordnet ist, enthält, wobei der Außenumfang des Ansaugkörpers (2) Mittel (2a) zum Betätigen des Ansaugkörpers (2) mittels des Betätigungsmechanismus (3, 4), der einem Antriebsmotor (5) des Systems zugeordnet ist, umfasst, **dadurch gekennzeichnet, dass** die Außenseite des Gehäuses (1) eine obere Öffnung (1a), die in Übereinstimmung mit einem Teilabschnitt des kreisförmigen Außenumfangs des Ansaugkörpers (2) angeordnet ist, umfasst, wobei eine gezahnte Oberfläche (2a) des Außenumfangs des Ansaugkörpers (2) von der Außenseite des Gehäuses (1) durch die obere Öffnung (1a) durch ein Zahnrad des Betätigungsmechanismus (3, 4) direkt betätigbar ist.

2. System nach Anspruch 1, wobei die Mittel zum Betätigen des Ansaugkörpers (2) eine Verbindungsfläche (2a) aufweisen, die in dem kreisförmigen Außenumfang des Körpers (2) vorgesehen ist, um in ein Zahnrad, das dem Antriebsmotor (5) zugeordnet ist, einzugreifen.

3. System nach einem der Ansprüche 1 bis 2, das einen Getriebezug umfasst, der aus mindestens zwei Zahnrädern (3, 4) besteht, um die Bewegung der Welle des Antriebsmotors (5) auf den Ansaugkörper (2) zu übertragen, wobei eines der Zahnräder konfiguriert ist, mit der Oberfläche des Außenumfangs des Ansaugkörpers (2) verbunden zu sein, um den Ansaugkörper (2) direkt zu betätigen.

4. System nach Anspruch 3, wobei das Zahnrad (3), das konfiguriert ist, mit der Oberfläche des Außendurchmessers des Körpers (2) in Verbindung zu stehen, aus einem Material hergestellt ist, das weniger Verschleißfestigkeit aufweist als jenes der gezahnten Oberfläche (2a) des Umfangs des Ansaugkörpers (2).

5. System nach einem der vorhergehenden Ansprüche, wobei der Ansaugkörper (2) ein Loch (7) enthält, durch das eine Welle, auf der der Körper (2) drehbar montiert ist, eingeführt wird, wobei die Luft, die durch die Luftansaugmittel des Systems angesaugt wird, durch das Loch (7) extrahierbar ist.

6. System nach einem der vorhergehenden Ansprüche, wobei das Gehäuse (1) Saataustritts- (8) und -eintritts- (9) Mündungen zugeordnet ist, die in Übereinstimmung mit der Saatgutdosierkammer, die die Verteilerscheibe (10) im Inneren des Gehäuses (1) definiert, angeordnet sind.

7. System nach einem der vorhergehenden Ansprüche, das ein Blockierelement (12) umfasst, das die Luftansaugung der Löcher (11) der Scheibe (10) blockiert, das konfiguriert ist, in der Art einer Rutsche auf einer Seite der Verteilerscheibe (10) montiert zu werden, wenn die Scheibe sich dreht, um die Luftansaugung zu unterbrechen und zu veranlassen, dass das Saatgut in Übereinstimmung mit einer Austrittsmündung (9) herabfällt.

8. System nach einem der vorhergehenden Ansprüche, wobei die Verteilerscheibe (10) aus Stahl hergestellt ist und der Ansaugkörper (2) aus einem Kunststoffmaterial hergestellt ist.

9. Pneumatische Einzelsaat-Pflanzmaschine, die das Dosiersystem nach einem der Ansprüche 1 bis 8 enthält.

10. Pneumatische Einzelsaat-Pflanzmaschine nach Anspruch 9, wobei sie mehrere Einzelsaat-Säscharen enthält, wobei jede der Säscharen das Einzelsaat-Dosiersystem nach einem der Ansprüche 1 bis 8 enthält.

11. Pneumatische Einzelsaat-Pflanzmaschine nach einem der Ansprüche 9 bis 10, wobei sie nur Ansaugluft benutzt, um Saatgut aus einer Dosierkammer jedes Einzelsaat-Dosiersystems zu extrahieren.

## Revendications

1. Système de dosage monograine de semences pour un semoir, qui comprend un boîtier (1) ayant des moyens de raccordement (6) pour se raccorder à des moyens d'aspiration d'air, un disque de distribution de semences (10) ayant une pluralité de trous (11) et un corps d'aspiration d'air (2) configuré pour être monté, en rotation, à l'intérieur dudit boîtier (1), ledit corps d'aspiration d'air étant adapté pour coopérer avec lesdits moyens d'aspiration d'air lorsque le système est utilisé, et ledit disque de distribution (10) étant susceptible d'être raccordé de manière solidaire audit corps d'aspiration (2) afin de définir une chambre de dosage pour les semences qui ont adhéré au disque de distribution (10) en raison de l'aspiration d'air, ledit système comprenant un moteur d'entraînement (5) et un mécanisme d'actionnement (3, 4) associé audit moteur d'entraînement (5), le périmètre externe dudit corps d'aspiration (2) comprenant des moyens (2a) pour actionner ledit corps d'aspiration (2) au moyen dudit mécanisme d'actionnement (3, 4) associé à un moteur d'entraînement (5) du système, **caractérisé en ce que** l'extérieur du boîtier (1) comprend une ouverture supérieure (1a) disposée en correspondance avec une section du périmètre circulaire externe du corps d'aspiration d'air (2), une surface dentée (2a) du périmètre externe du corps d'aspiration (2) étant susceptible d'être directement actionnée depuis l'extérieur du boîtier (1) par le biais de ladite ouverture supérieure (1a) par un engrenage du mécanisme d'actionnement (3, 4).

2. Système selon la revendication 1, dans lequel lesdits moyens pour actionner le corps d'aspiration (2) comprennent une surface d'interconnexion (2a) envisagée dans le périmètre circulaire externe dudit corps (2) pour se mettre en prise avec un engrenage associé avec ledit moteur d'entraînement (5).

3. Système selon l'une quelconque des revendications 1 à 2, qui comprend un train d'engrenages se composant d'au moins deux engrenages (3, 4) pour transmettre le mouvement de l'arbre dudit moteur d'entraînement (5) audit corps d'aspiration (2), dans lequel l'un desdits engrenages est configuré pour être interconnecté à la surface du périmètre externe dudit corps d'aspiration (2) pour actionner directement ledit corps d'aspiration (2).

4. Système selon la revendication 3, dans lequel ledit engrenage (3) qui est configuré pour s'interconnecter à la surface du périmètre externe dudit corps (2) est réalisé avec un matériau présentant moins de résistance à l'usure que celui de la surface dentée (2a) du périmètre du corps d'aspiration (2).

5. Système selon l'une quelconque des revendications précédentes, dans lequel ledit corps d'aspiration (2) comprend un trou (7) par lequel un arbre sur lequel ledit corps (2) est monté en rotation, est introduit, dans lequel l'air aspiré par les moyens d'aspiration d'air du système est susceptible d'être extrait par ledit trou (7).

6. Système selon l'une quelconque des revendications précédentes, dans lequel ledit boîtier (1) est associé à des bouches de sortie (8) et d'entrée (9) de semences, disposées en correspondance avec la chambre de dosage de semences qui définit le disque de distribution (10) à l'intérieur du boîtier (1).

7. Système selon l'une quelconque des revendications précédentes, qui comprend un élément de blocage (12) qui bloque l'aspiration d'air des trous (11) du disque (10) qui est configuré pour être monté afin de coulisser d'un côté du disque de distribution (2) lorsque ledit disque tourne, afin d'interrompre l'aspiration d'air et d'amener les semences à tomber en correspondance avec une bouche de sortie (9).

8. Système selon l'une quelconque des revendications précédentes, dans lequel ledit disque de distribution (10) est réalisé en acier et ledit corps d'aspiration (2) est réalisé en matière plastique.

9. Semoir monograine pneumatique qui comprend le système de dosage selon l'une quelconque des revendications 1 à 8.

10. Semoir monograine pneumatique selon la revendication 9, dans lequel il comprend une pluralité de groupes d'ensemencement monograine, chacun desdits groupes d'ensemencement comprenant le système de dosage monograine de semences selon l'une quelconque des revendications 1 à 8.

11. Semoir monograine pneumatique selon l'une quelconque des revendications 9 à 10, dans lequel il n'utilise que l'air d'aspiration pour extraire les semences d'une chambre de dosage de chaque système de dosage monograine de semences.
